Europäisches Patentamt

European Patent Office

Office européen des brevets

(11) Publication number: **0 314 822 B1**

# EUROPEAN PATENT SPECIFICATION

(45) Date of publication of patent specification: **20.05.92**  (51) Int. Cl.⁵: **G01F 11/28**, B01D 37/04

(21) Application number: **87116109.7**

(22) Date of filing: **02.11.87**

(54) **Apparatus and process for fluid flow control.**

(43) Date of publication of application:
**10.05.89 Bulletin  89/19**

(45) Publication of the grant of the patent:
**20.05.92 Bulletin  92/21**

(84) Designated Contracting States:
**AT BE CH DE ES FR GB GR IT LI LU NL SE**

(56) References cited:
**EP-A- 0 223 300
US-A- 2 627 280
US-A- 3 875 955
US-A- 4 064 740**

(73) Proprietor: **PALL CORPORATION
30 Sea Cliff Avenue
Glen Cove New York 11542(US)**

(72) Inventor: **Randhahn, Horst W. Dr.
Dresdner Strasse 16
W-6074 Rödermark(DE)**

(74) Representative: **Geissler, Bernhard, Dr. jur.,
Dipl.-Phys. Patent- und Rechtsanwälte et al
Bardehle-Pagenberg-Dost- Altenburg-
Frohwitter-Geissler & Partner Postfach 86 06
20
W-8000 München 86(DE)**

Rank Xerox (UK) Business Services
(3.08/2.19/2.0)

**Description**

This invention relates to an apparatus and a process for metering and controlling fluid flow. More specifically this invention relates to apparatus and process for testing filters. Yet more specifically this invention relates to procedures and apparatus for testing appliances with the aid of a test device which can be added to the system to be tested.

Applicant has developed a process for integrity testing a filter which is referred to in the trade as a forward-flow-test process. This process represents a quantitative method for the testing of the functioning of filter elements or complete filter units composed of a plurality of filters. The test process involves subjecting the wetted filter or filters to a pressure below the capillary pressure, i.e. below the pressure necessary to remove the wetting fluid from the largest filter pores. At that pressure the only gas movement through the wetted filter is through diffusion through the wetting fluid in the pores or through leaks. This process is based on measuring the pressure/time behavior of the system to be tested under a set initial pressure.

The process and apparatus developed by applicant referred to above constitutes a significant contribution to the art of filter integrity testing. However, for different size users and different kinds of filters different apparatus have to be designed and developed. It would be very desirable to have an apparatus and process available which can be used for a wide variety of applications including filter integrity testing. In particular such apparatus and processes should be useful for a broad range of volumes and flows as well as a broad range of pressures for the user.

It is thus one object of this invention to provide an apparatus for metering and/or controlling and/or measuring fluid flow into a user which is applicable to a variety of different users.

Another object of this invention is to provide such apparatus or process which can be used by users within a pressure range, volume range and fluid flow range encompassing a factor of 100 or more between the highest and the lowest value for the respective range.

It is yet a further object of this invention to provide such apparatus and process which is fully automatic and computer controlled.

These and other objects of this invention will become apparent from the following description of preferred embodiments of this invention, the claims as well as the detailed description of the drawing in which

Figure 1 shows a schematic arrangement of the apparatus of this invention in a test set-up;

Figure 2 shows a block diagram of the pneumatical functions of the apparatus of this invention;

Figure 3 shows the principle connections between the computer and the pneumatical units of the apparatus of this invention;

Figure 4 shows a flow diagram of the principle steps of the computer control software;

EP-A-223 300 describes a gas meter. Binary clack valves are connected in parallel with passage capacities which differ from one another. By opening or closing one of these valves the respective passage is opened or closed. The passage capacity can thereby be adjusted between opened and closed.

US-A-3 875 955 describes a digital fluid flow rate measurement or control system. A plurality of individually actuatable value weighted digital bistable valve elements in parallel interconnect a fluid source to a fluid receiver. For measurement, the states of the digital valve elements are controlled to maintain the value of the fluid parameter constant. For control the states of the digital valve elements are controlled to establish a set-point flow rate.

US-A-2 627 280 describes a flow control system. There are means for selectively opening and closing one or more of a plurality of orifices of a suitable diameter in a partition and there are means for maintaining a constant predetermined pressure difference between the upstream and the downstream sides of the orifices.

The above objects are solved by apparatus and processes as defined in the claims. Preferred embodiments are defined in the dependent claims.

Thus in accordance with this invention an apparatus for metering and controlling fluid flow is provided. This apparatus is defined by comprising a plurality of parallel flow streets with each street having associated therewith a different fluid volume. Each street is capable of digitally dispensing its fluid volume. This means that the street is arranged for loading its volume with fluid of a given pressure and thereafter unloading this volume to a user. The actual quantity of fluid dispensed between the fluid volume of an individual street digitally connected to the user is simply given by the gas equation and the initial and final pressure in the fluid volume of the street. The process thus involves the timed connection of a chamber containing fluid under defined pressure, the chamber having defined volume, to the user, whereby through the chamber volume, chamber pressure, user pressure and timing of the connections a defined mass flow is provided to the user without a measurement of the flow. This digital fluid supply is provided from a plurality of streets containing chambers of defined but vastly differing volumes, thereby achieving a very broad variation in applications.

More specifically in accordance with a preferred embodiment the apparatus of this invention comprises the following elements:

a. A first connector unit for the connection with a pressure controllable source of fluid. This connector serves for a connection of the individual streets to a source of fluid of defined pressure. The fluid volumes are filled through this connector from the fluid source with a defined quantity of fluid, which quantity can be calculated through the gas equation from the volume and the pressure of the fluid source.

b. A plurality of n fluid flow streets. Each of these streets comprises in serial flow connection.

aa. An inlet valve being in fluid communication with one side of the connector;

bb. A chamber of defined volume, said chamber having a chamber inlet and a chamber outlet, said chamber inlet being connected to the other side of said inlet valve;

cc. An outlet valve connected with one side of the chamber outlet.

The volume sizes of the chambers of these n streets form a series from a smallest to a largest volume. Preferably each larger volume is significantly larger than the next smaller volume.

In accordance with particularly preferred embodiments the volume sizes of this series are a geometrical series. Yet both preferred is an arrangement in which each higher volume is ten times as large as the immediately preceding smaller volume.

The preferred range of volumes is presently 0.01 to 1000 ml. yet more preferably the chambers have a volume size of 0.02 ml, 0.2 ml, 2 ml, 20 ml and, optionally 200 ml.

In yet other terms, the preferred arrangement of the streets is such that the volume sizes of the individual chambers are defined by the following equations:

$$\text{Vol } 0 = z$$
$$\text{Vol } 1 = z * f$$
$$\text{Vol } 2 = z * f^2$$
$$\text{Vol } 3 = z * f^3$$
$$.$$
$$.$$
$$.$$
$$\text{Vol } n = z * f^n$$

In this equations Vol m means the volume of the m-th chamber. The value z constitutes the volume of the smallest chamber (Vol 0), the counting beginning with 0 in this preferred embodiment, f constitutes the factor by which the volumes increase through the streets. This factor f in the preferred embodiment is 10.

Generally f will be in a range of 2 to 20.

c. A second connector unit for connection with a user of fluid. This connector is in fluid communication with the other side of the outlet valves.

d. A plurality of 2 * n actuating means for operating one of the n inlet valves or respectively on of the n outlet valves upon the receipt of a corresponding actuating signal at the input thereof. These actuating means are adapted and arranged to either open the street completely, i.e. open both the inlet and the outlet valve of the respective street, or open the street for digital fluid dispensing, i.e. carry out a cycle of fluid dispensing opening the inlet valve with the outlet valve closed so that the respective chamber of the street is being filled with fluid at the pressure of the fluid source; thereafter closing the inlet valve, thereafter opening the outlet valve for dispensing the fluid from the chamber to the user.

e. A computer control unit is operatively connected to the inputs of the actuating means. The computer is arranged and programmed to provide signals to the actuating means for opening and closing the respective valves in a predetermined and controlled fashion. Preferably this control is such that initially streets are selected by the computer depending upon the speed of pressure build-up at the user so that the user is provided with fluid at the given pressure of the fluid source; thereafter streets are selected to digitally provide the user with slugs or shots of fluid from the respective chamber of a selective street such as to subject the user to a predetermined pressure/time characteristic. This pressure/time characteristic preferably is such that a constant pressure is maintained at the user.

In accordance with a further embodiment of this invention a process for passing fluid is provided. In accordance with this process fluid is passed from the inlet of a manipulator to an outlet thereof in accordance with a further defined procedure. The manipulator is a multi path unit or a multi street unit as further defined herein. The process is characterized by first passing the fluid through the path or street with the chamber having the smallest volume. This street is preferably also the street with the highest flow resistance. The process involves an automatic determination of the pressure/time behavior of the user being supplied with fluid through this street. The pressure/time behavior can then be such that the pressure rise at the user is too low. Then the consumption of the fluid by the user is apparently too slow. In accordance with this process of the invention the flow is then switched to another street having a higher volume and generally and preferably a lower flow resistance. This measuring and switching is repeated, until the pressure/time behavior of the user is in a desired range. In this operation the streets are used not in a digital fluid providing manner but in a straight flow arrangement.

The further embodiment of this invention involves the use of the multi street manipulator in a digital fluid flow arrangement. In this process a source of fluid of defined pressure is connected to the individual streets. A connection between a user of the fluid and the outlet valves of the streets is also provided. The fluid is then passed to the user from one of the streets by a cyclic and digital fluid flow operation. In other words, the user is connected to the fluid volume trapped in the street, but not to the fluid source directly. The cyclic operation preferably is opening the input valve of the street to fill the respective volume with the fluid of a given pressure; closing the input valve or respectively disconnecting the fluid source from the chamber; thereafter connecting the chamber containing the fluid of the defined pressure with the user; the latter is preferably and simply done by opening the outlet valve of the street.

It is, however, also within scope of this invention to use for instance a rotating chamber valve which in one position is connected to the fluid source and in the other position is connected to the user. Preferably such a chamber valve having only one valve body would in a third position provide a direct connection between the source fluid and the user. When employing this type of valve the first embodiment of the process would be carried out with the valve in the connecting position while the digital fluid providing process would be carried out by switching the valve back and forth between the other two positions mentioned.

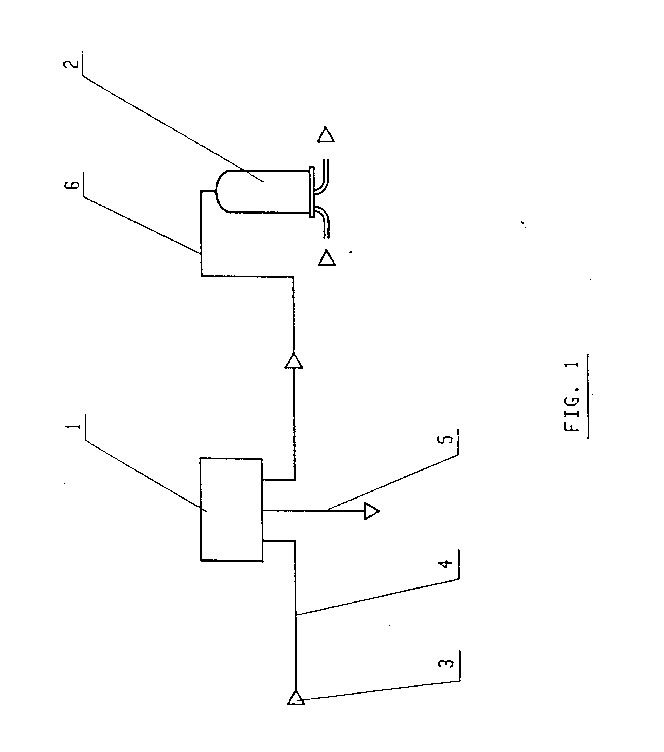

Figure 1 shows schematically an arrangement of the apparatus 1 of this invention as employed in an integrity testing set-up in connection with a filter housing 2. Test gas is supplied from a test gas source 3 via an inlet conduit 4 to the apparatus 1 for metering and controlling fluid flow. A vent line 5 is connected to the apparatus and the fluid as controlled by the apparatus 1 is supplied via conduit 6 to the filterhousing 2.

Within the filter housing 2 a filter (not shown) is arranged which divides the interior of housing into two portions. The test fluid from conduit 6 can flow from one portion of the housing through to the other portion only via the filter or filters to be tested. In the actual test procedure these filters are employed in a wetted stage.

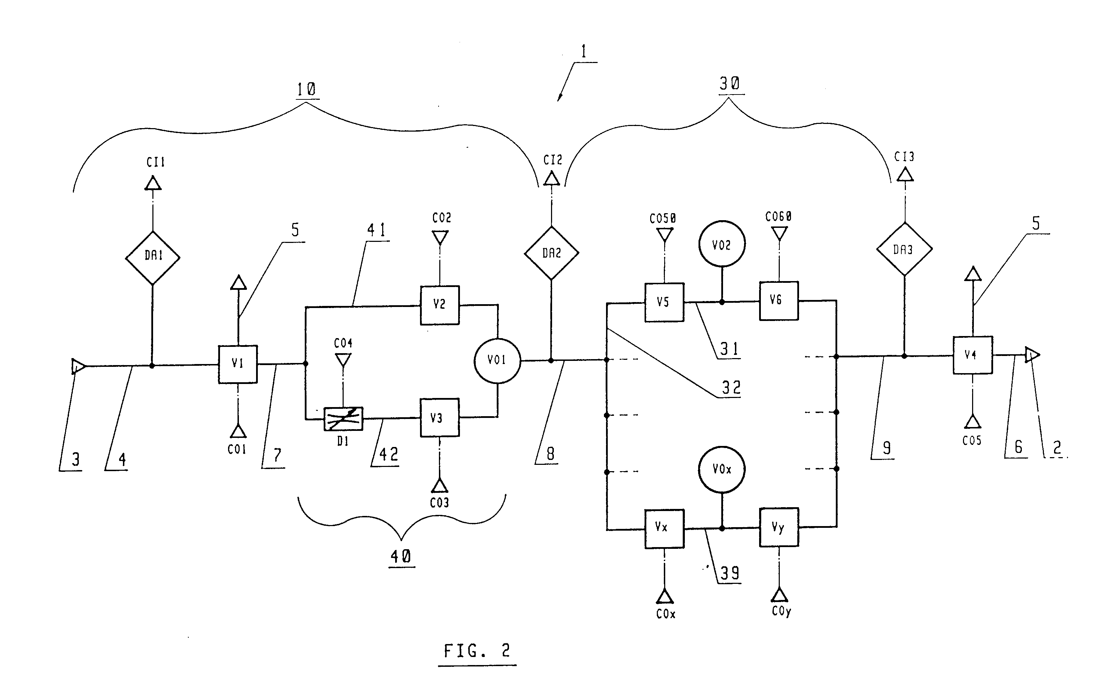

In Figure 2 the apparatus 1 of this invention is shown in more detail. The arrangement of the individual units will be described in the following in conjunction with the operation of a filter integrity testing procedure. The apparatus 1 of this invention in this preferred embodiment is comprised of essentially two units. The first unit 10 can be viewed as the source of test fluid of constant pressure. This unit also serves for the flow control at the given pressure. The second unit 30 constitutes the unit for digital flow control and comprises a plurality of paths 31, 32 . . .39. Preferably the number of paths is 2 to 10, more particularly 3 to 8. In a specific example 4 paths have been successfully employed.

The apparatus 1 of this invention is preferably arranged for fully automatic computer controlled operation. Each computer input is schematically represented by a reference numeral CI while each computer output is represented by a reference numeral CO. It is of course to be understood that the usual converting units are employed which allow either the conversion of the measured signal into a signal which can be received by a digital computer, such units generally involving an analog to digital convertor, and units to convert the digital information from a computer into signals which then actuate valves or switches or the like, such apparatus may involve digital to analog converters.

The pressure of the fluid from the fluid source 3 in conduit 4 is determined by the pressure sensor DA1. The computer receives a corresponding signal via the computer input signal CI1. In order to maintain the pressure of the fluid at a constant value a throttle valve V1 is employed downstream of the location of the pressure detector DA1. The throttle valve V1 is operated by a computer generated signal coming from the computer output CO1. The vented test fluid is passed to vent conduit 5.

The arrangement is such that there is constantly a significant stream of test fluid, usually air, vented through line 5 so that a good control and amendments of a constant pressure in the system is feasible.

The pressure control fluid from the vent valve V1 is passed via conduit 7 to a flow control unit 40. This flow control unit comprises two parallel passages 41 and 42. The passage 41 is controlled by a valve V2. The passage 42 is controlled by a valve V3 and by a controllable flow resistor or throttle D1. Signals from computer outputs CO2, CO3 and CO4 from the computer control the operation of valve V2, valve V3 and throttle D1 respectively.

Both passages 41 and 42 lead to a buffer chamber VO1. This buffer chamber VO1 typically and preferably has a volume in the range of 50 to 5.000 ml. The buffer chamber serves to provide a sufficient supply of the fluid to be passed onto the user 2, in this case the filter housing. The buffer volume also has the function to prevent otherwise occurring wave formation or oscillations in the fluid stream.

A pressure sensor DA2 in the connecting line 8 between unit 10 and unit 30 determines the pressure of the fluid in this line and supplies a corresponding signal to the computer input CI2.

The multi-path unit 30 comprises a plurality of paths 31, 32 ... 39 connecting conduit 8 and conduit 9, thus providing for a fluid connection in a controlled fashion between the user 2 and the source of pressure controlled fluid. The buffer volume or buffer chamber VO1 can be viewed as the source of this pressure control fluid. Conduits 8 and 9 constitute an inlet connector and an outlet connector for the respective ends of the parallel flow paths 31, 32 ... 39.

Each of the paths has an inlet and outlet valve function - in case of path 31 the inlet valve function is represented by valve V5 and the outlet valve function is represented by valve V6 - and a fluid volume between the two valves - in the case of path 31 this volume is VO2 - so that each of the volumes between the valve functions can be filled with the fluid of defined pressure from the buffer chamber VO1 and thereafter can be connected to the user 2. In the case of the last path 39 represented in Figure 2, the inlet valve function is given by valve Vx, the outlet valve function by valve Vy and the chamber of given volume between the two valve functions is represented by the volume VOx.

A third pressure sensor DA3 is operatively connected to conduit 9 and a signal corresponding to the pressure determined by this pressure sensor DA3 is supplied to the computer via the computer input CI3. The connection between the outlet connector line 9 connecting all the parallel outlets of the plurality of paths 31, 32 ... 39 and the inlet conduit to the user (in this particular case filter housing 2), is made via a vent valve V4 controlled by computer generated signals from the computer outlet CO5. The vent valve, if operating under venting conditions, releases fluid into vent line 5. This vent valve V4 serves to vent the user 2 in a normal operating cycle at the end of such a cycle and can also serve as a safety valve in case the pressure in line 9 should inadvertently rise above a set value.

In the test procedure the filter housing 2 is connected to conduit 6 and the fluid source 3 is connected to conduit 4.

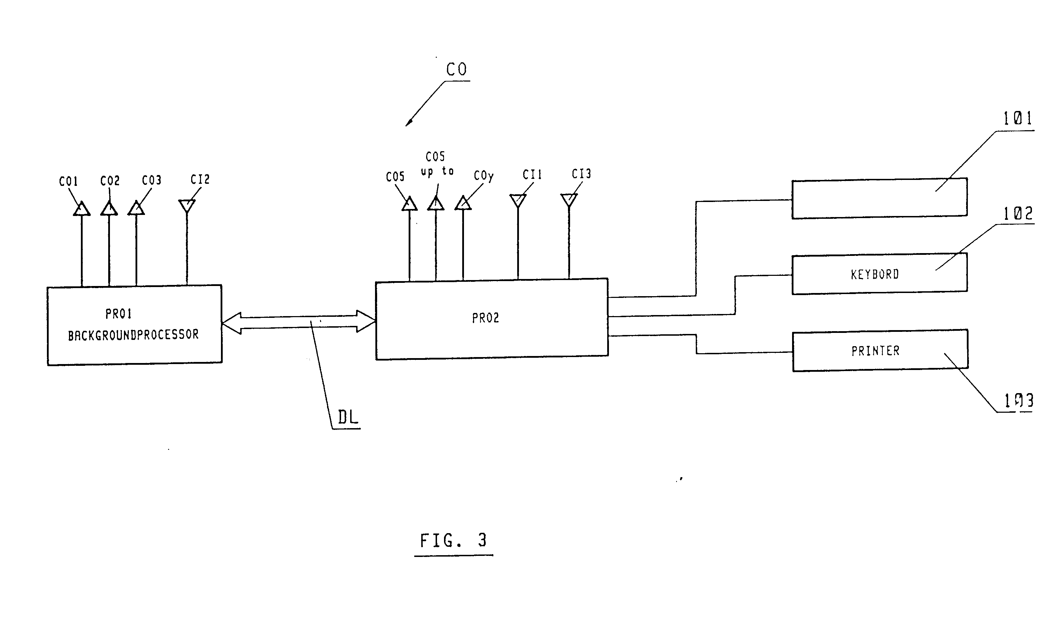

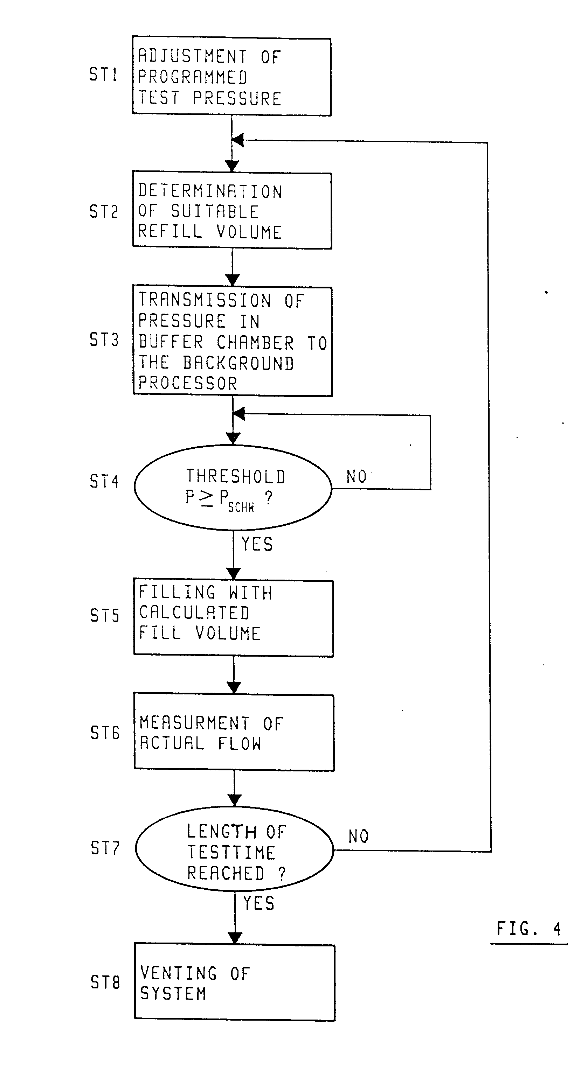

Certain inputs are made to the computer as will be described in conjunction with Figures 3 and 4.

The operation of the test procedure, which is fully automatically controlled by the computer, first opens valve V1 completely while the pressure in line 4 is measured by DA1 and a corresponding signal is received by the computer from computer input CI1. Valves V2 and V3 are also fully opened thereby filling the buffer chamber VO1 with test fluid.

The path 31 with the highest flow resistance and the smallest volume VO2 is initially provided by opening valves V5 and V6 to supply test fluid via conduit 9 to conduit 6 and ultimately to the filterhousing 2. Valve V4 at this stage is fully opened, i.e. no fluid is being vented. This is the normal operation position of vent valve V4 which, as pointed out, is only used as a safety valve and for venting the user 2 at the end of a test cycle.

The rise of the pressure in conduit 9 which corresponds to the rise of the pressure at the user 2 is determined via the pressure sensor DA3 and the respective information is provided to the computer via the computer input CI3. The computer determines the time/pressure behavior at this point. If the pressure increase at line 9 is too low, then the computer generates a signal to close both valves V5 and V6 and switches to the next higher path 32 by opening the respective valves. Each path 31, 32 ... 39 has its inlet valve and its outlet valve controlled automatically via a connection to a respective computer output so that the inlet valve and the outlet valve of each path can be operated independently. Thus for path 31 or path 39 respectively inlet valve V5 is controlled from computer outlet CO50, inlet valve Vx for path 39 is controlled from computer output COx and correspondingly outlet valve V6 of path 31 is controlled from computer outlet CO60 while outlet valve Vy is controlled from computer outlet COy. After switching to the path 32 with the next lower flow resistance and the next higher volume, the pressure/time behavior in line 9 is again determined by the computer and the switching to the next path is continued until the pressure/time behavior in the line is as desired.

Then the flow of test fluid to the user 2 is continued until a pressure in conduit 9 and thus at the user 2 has been reached which is close to the test pressure, e.g. about 90% of the test pressure has been reached. Thereafter the flow of test fluid to the user 2 is reduced. This is accomplished by automatically closing valve V2 through a signal from computer output CO2 and operating the throttle D1 controlled by computer output CO4 so that the pressure rise, i.e. the pressure/time behavior is as desired, namely significantly slower than prior to closing valve V2.

Once the pressure sensor DA3 indicates that the test pressure has been reached in line 9 and thus at the user 2 the computer generates a signal to close also valve V3. No more fluid is supplied to the user 2 and the pressure decay, the time/pressure behavior of the user 2, is determined via the pressure sensor DA3 and the values are registered in the computer from the computer input CI3.

Based on this pressure decay information and additional information initially provided to the computer, the computer selects one of the paths 31, 32 ... 39, which when digitally operated will accomplish a compensation for the pressure decay by a number of cycles per time unit, which number is within a preset range. In other words, the computer selects automatically that one of the paths 31, 32 ... 39 for which under a given pressure differential between the respective chamber VO2 ... VOx when switched z times per minute into connection with the user 2 provides a compensation for the pressure loss registered via the computer input CI3, with the proviso that this number z be within a defined range. Preferably this range of digital fluid supplies through the respective path is in the range of 2 to 20, more preferably in the range of 6 to 10 per minute

The initial selection by the computer of a given path may or may not accomplish the desired purpose. If this selection accomplishes the desired purpose and a defined number of digital gas supplies compensates exactly the pressure drop, for example, 1 digital gas supply of the respective path every 8.7 seconds, then this value is registered in the computer and further processed, displayed, etc. If, on the other hand, the goal by this initial selection by the computer of a path is not achieved then the operation continues as follows. At the given pressure differential between the buffer volume VO1 and the test pressure at the user 2 the smallest volume VO2 is supplied and the pressure/time behavior of the fluid in line 9, i.e. in the user 2, is determined. If this pressure/time behavior if still one of decaying pressure, then the path with the next higher volume is selected; again the pressure/time behavior in line 9 is determined; and again a switch to the path of next higher volume is accomplished, if the pressure is still falling.

Then, once a path has been found for which the compensation for the pressure decay is accomplished and for which the number of cycles required are within the desired range, the operation is continued in that path, the value or values are registered for the process, etc.

If the switching to the next path results in a pressure increase when the number cycles is at the lower limit of the desired range of cycles per unit time, then the computer either automatically switches back to the previous path with the next smaller chamber volume and increases the set pressure for the buffer chamber VO1, or it remains in that path and reduces the set pressure for the buffer chamber VO1.

Correspondingly, if the path in which the digital fluid supply is being carried out at the upper limit of cycles per time unit still does not quite compensate for the pressure decay, e.g. it would require 13 switches or digital fluid supplies per minute rather than 6 to 10, then an increase in the pressure set point for the buffer chamber VO1 is automatically provided by the computer.

Ultimately, the apparatus 1 operates so that the test pressure at the user 2 is maintained by digitally operating the fluid supply through the respective path and at a given pressure differential between the pressure of the buffer chamber VO1 and the user 2. These values then allow the computer to precisely determine and display the integrity and quality of the respective filter being tested.

Thus in this specific example of filter integrity testing the computer selects in an iteration procedure a path with a given chamber volume, a pressure differential between the buffer chamber VO1 and the user 2 and a number of cycles or digital fluid supplies within the given range of cycles per time unit so that the pressure at the user 2 is maintained right at the test pressure. Typically the test pressure does not change more than 2 mbar during this steady state operation.

Figure 3 schematically shows the computer CO as employed in the preferred embodiment of this invention. The computer has a first processor PRO1 and a second processor PRO2 which are connected by means of a datalink line DL. The first processor PRO1 essentially operates valves V1, V2 and V3 controlled by the pressure signal from the pressure sensor DA2, i.e., among other things, to maintain a set pressure in the buffer volume VO1.

the second processor PRO2 receives the signal corresponding to the pressure in the pressure sensor DA1 via the input CI1 and the signal corresponding to the pressure in the pressure sensor DA3 via the input CI3.

This processor operates the valves V4 via the output CO5 as well as the 2 * n valves V5, V6 ... Vx, Vy of the n paths 31, 32 ... 39 via the outputs CO50, CO6O ... COx, COy. This processor PRO2 is also operatively connected to a LCD display 101, to a key board 102 and to a printer 103.

The principle steps of the automatic operation of the filter integrity test procedure are shown in the flow diagram of Figure 4. The first step ST1 consists in the adjustment of the test pressure. The value for this test pressure has been input to the computer before. In this stepST1 the valve V1 with valves V2 and V3 opened is adjusted so that the pressure at the sensors DA2 corresponds to preset pressure differential below the test pressure.

In the next step ST2 the appropriate digital filling volumes are determined. This step in other words determines the initial path 31, 32 ... 39 which is to be used in the beginning of the pressure compensation operation with digital supply of a gas volume VO2 ... VOx. Details are given in the attached software program.

In the third step ST3 the operating pressure for the buffer chamber VO1 is provided to the background processor PRO1 and in a cyclic operation the valve V1 is adjusted via the computer output CO1 so that the pressure in the buffer chamber VO1 is maintained at a constant value, namely a given amount above the test pressure.

In the fourth step ST4 the system pressure limits for refilling to the user are fixed.

In the fifth step ST5 the computer automatically sets the parameter for filling the user 2 with a computed fill volume and DELTA p.

In the sixth step ST6 the actual flow is measured.

In the seventh step ST7 the test time is determined. If this test time has not exceeded a preset value of e. g. 600 seconds, than the system returns into the program to resume step ST2. If the test time has not been exceeded than the system is vented in step ST8.

```
#define    VOLANZ 4          /X 4 buffer volumina V02,...,V05              X/

#define       DA1 1          /X Pressure Transducer #1                     X/
#define       DA2 2          /X    "            "       #2                 X/
#define       DA3 3          /X    "            "       #3                 X/
#define PRESS_SET 12         /X CPU select function for 'pressurise V01'   X/
#define      OPEN 1          /X Function defining: Valve open              X/
#define     CLOSE 2          /X    "            "   : Valve closed         X/
#define VOL_EMPTY 750        /X Time for depressurization of Volumina [msec] X/

/X-----------------------------------------------------------------------X/

extern double      mess();   /X Pressure measuring subroutine             X/
extern double      time();   /X Time          "           "              X/
extern         volentry();   /X Subroutine for regulation of Valves V5 - Vx X/
extern          volexit();   /X      "      "      "      "      " V6 - Vy X/

extern double      pathmo  ; /X Actual atmospheric pressure               X/
extern double      volume[]; /X Actual volumina in cmX3 for V02,...,V05   X/

/X-----------------------------------------------------------------------X/

static double    timestart   ; /X Starting timer in msec                  X/
static double    flowsum      ; /X Summ of all filling volume rates        X/
static double    v01pmin      ; /X Minimum pressure in buffer volume V01   X/
static double    v01pmax      ; /X maximum     "      "    "      " V01    X/
static double    v01pact      ; /X Pressure in V01 before refilling mode   X/
static double    pstart       ; /X System pressure  "       "      "      X/
static double    pend         ; /X System      "    after    "      "     X/
static double    dpvol[VOLANZ]; /X Pressure change in the system by the
                                    last refilling mode                    X/
static double    dpdff[VOLANZ]; /X Differential pressure between buffer
                                    volume V02,...,V05 and system for the
                                    last refilling mode                    X/
```

```
/X    Flow - Measurement                                                    X/

double flowtest(testpressure,testtime)
double    testpressure;  /X Testpressure                                    X/
int           testtime;  /X Testtime                                        X/

{  int              vol;  /X Actual Refilling Volume (0=V02, 1=V03, ...)    X/
   int            timer;  /X Testtime Timer         (testtime,....,1,0)     X/
   double v01pressure;  /X Pressure regulation for V01 (Backgound)          X/
   double         flow;  /X Actual flow                                     X/

   flow     = flowsum     =   0.0;
   V01 pmin = test pressure + 200,0;

   /X   Adjusting of the preset Test pressure                              X/
   adjust_testpressure(testpressure);

   /X   Test starting time to memory                                       X/
   timestart = time();

   /X   Calculation of average for test time                              X/
   timer    =       testtime;
   while ( timer )
   {
       /X   Calculation of maximum pressure for V01                       X/
       v01pmax  =   mess ( DA1 ) - 200.0;

       /X   Selection of refilling volumina                               X/
       vol = vol_select (flow,v01pressure);

       /X   V01-Pressure -> Background                                     X/
       cpu1comm ( PRESS_SET , v01pressure );

       /X   Wait until system pressure decrease to threshold pressure      X/
       while  ( mess(DA3) > thrsh_calc(testpressure,vol) );

       /X   Starting for refilling                                         X/
       vol_fill (vol);

       /X   Calculation of the actual Flow                                 X/
       flow_calc(vol,&flow);
   }
}
```

```
/X    Adjusting of the preset test pressure                          X/

static adjust_testpressure(testpressure)
double  testpressure;               /X Testpressure                  X/

{   double actpressure;             /X Actual system pressure        X/
    vt01a();                        /X Open line pressure valve V1    X/
    vt05a(); vt06a(); vt07a();      /X Open valves to system          X/

    /X    Adjusting preset test pressure loop                        X/
    actpressure = mess(DA2);        /X Measure system pressure (DA2)  X/
    while ( actpressure< testpressure-2.0 :: actpressure>testpressure+2.0 )
    {  if ( actpressure>=testpressure+2.0 ) vent (testpressure);
       if ( actpressure< testpressureX0.9 ) fill2(testpressure);
                                    else  fill3(testpressure);
       actpressure = mess(DA2);     /X Measure system pressure (DA2)  X/
    }
}


/X    Pressure to high -> Venting                                    X/
static vent(testpressure)
double  testpressure;               /X Test pressure                 X/

{   vt01z ();                       /X V1 switched for venting        X/
    vt02a ();
    while ( mess(DA2) > testpressure+2.0 );
    vt02z ();
    vt01a ();                       /X V1 switched for filling        X/
}


/X  System pressure below 0.9 X Testpressure                         X/
static fill2(testpressure)
double  testpressure;               /X Test pressure                 X/

{   vt02a ();
    while ( mess(DA2) < testpressureX0.9 );
    vt02z ();
}


/X  Filling through valve V3                                         X/
static fill3(testpressure)
double  testpressure;               /X Test pressure                 X/

{   vt03a ();
    while ( mess(DA2) < testpressure-2.0 );
    vt03z ();
}
```

```
/X   Selection of the necessary refilling volume for refilling cycles in   X/
/X   5 - 10 sec intervals                                                  X/

static int vol_select(flow,v01pressure)
double          flow;            /X Expected Flow                          X/
double  Iv01pressure;           /X Calculated Pressure for V01 (Background)X/

{   int  vol;                    /X Selected Refilling Volume              X/
    for ( vol=0 ; vol<VOLANZ ; vol++ )
    { Iv01pressure = (flow I pathmo I 5.0) / (volume[vol] I 60.0);

        /X Calculated pressure for V01 in limits ??                        X/
        if ( (Iv01pressure  )=v01pmin && Iv01pressure  <=v01pmax) ::
           ⎧Iv01pressureI2)=v01pmin && Iv01pressureI2<=v01pmax)  ) break;
    }
    return ( vol );
}

/X------------------------------------------------------------------------X/

/X   Calculation of the threshold refilling value                         X/

static double thresh_calc(testpressure,vol)
double  testpressure;            /X Test pressure                          X/
int             vol;             /X Selected Volume                        X/

{   return (
            testpressure - (dpvol[vol] I (mess(DA2) - mess(DA3)) / dpdff[vol])
            );
}

/X------------------------------------------------------------------------X/

/X   Start refilling with selected volume                                 X/

static vol_fill(vol)
int             vol;             /X Selected Volume                        X/

{ /X   System pressure before refilling                                    X/
    pstart   = mess ( DA3 );

    /X   Volume pressure V01 before refilling                              X/
    v01pact  = mess ( DA2 );

    /X   Close volumina input valve, Open volumina output valve            X/
    volentry ( vol , CLOSE );
    volexit  ( vol , OPEN );

    /X   Wait for depressurization of refilling volume                     X/
    wait     ( VOL_EMPTY );

    /X   Close volumina output valve, open volumina input valve            X/
    volexit  ( vol , CLOSE );
    volentry ( vol , OPEN );

    /X   System pressure after refilling                                   X/
    pend   = mess    ( DA3 );
```

```
/*   Calculation of actual flow                                          */

static flow_calc(vol,flow)
int             vol;           /* Selected volume                       */
double          *flow;         /* Calculated flow                       */

{   flowsum += ( dpvol[vol] * ( v01pact - pend ) / pathmo);
    *flow    = flowsum * (double)60.0 / (double)( time() - timestart );
}
```

Typical and therefore preferred ranges for individual process parameters, which also apply to the apparatus to this invention, are shown in the following:

Typical test pressure                                         50 to 6.000 mbar

Test pressure range as a percentage
of the capillary breakthrough
pressure limit                                               70 to 90 %

Range for the time between
subsequent digital chamber
switches                                        about 6 to about 10 sec.

Typical ratio during which the
switched chamber is in open
communication with the user                     0.1 to 1000 msec.

Buffer volume pressure excess
(i.e. pressure excess of the
fluid source or chamber volume
over the test pressure)                              100 to 5000 mbar
                                    preferably:    200 to 2000 mbar

Typical operating temperature                        0°C to 100°C
                                    preferably:    10°C to  50°C

## Claims

1. A process for passing fluid from a source (3) of fluid through a controller (1) to a fluid user (2), in particular a filter testing unit, said controller comprising a plurality of parallel flow paths (31, 32.....39) each including a respective chamber ($VO_x$), the chamber of each path having a different volume from those of chambers of other paths, wherein one of said paths is used for fluid passage, said process being characterized by
   a) determining the pressure/time behavior of the user (2) and thereupon selecting one of said paths for said fluid passage,
   b) passing fluid through said selected one path to said user in a digital manner by alternatingly

aa) opening an inlet of said selected path connected to said source (3) to fill same with fluid, an outlet of said path connected to said user being closed,
bb) closing said inlet and opening the outlet of said selected path, thereby supplying a fluid volume as a fluid pulse to the user.

2. A process in accordance with claim 1, further comprising,
c) determining the pressure/time behavior of said user in step (a) by automatically measuring a pressure decay in said user;
d) compensating the pressure decay by providing a fluid volume from the chamber of said selected path to said user by cycles according to step (b) to maintain the number of such cycles necessary per time unit to compensate the pressure drop speed within a predetermined range;
e) repeating steps (c) and (d).

3. A process in accordance with claim 1 or 2, wherein the number of cycles per minute is in a range of 4 to 12, more particularly 6 to 10 cycles per minute.

4. A process in accordance with claim 1 or 2, wherein the volume sizes of the chambers ($VO_x$) of said paths form a series of volumes sizes from a smallest to a largest volume, in particular wherein each larger volume is significantly larger than the next smaller volume.

5. A process in accordance with claim 4, comprising prior to step (a), the steps of passing fluid through the flow path with the chamber of smallest volume;
automatically determining the pressure/time behavior of the user;
if said pressure/time behavior is indicating too fast a consumption of fluid by the user, automatically switching to passing said fluid through the path with the chamber of next higher volume;
repeating the above steps until the pressure/time behavior of the user is in a desired range.

6. A process in accordance with one of the preceding claims comprising controlling the pressure of the source (3) of fluid at a value that equals a pressure set point, in particular wherein said pressure set point is 0.1 to 5 bar, more specifically 0.2 to 2 bar above the user-pressure.

7. A process in accordance with claim 6, comprising carrying out one or both of the following steps if the pressure decay at said user is such that for the given pressure set point and for the operating flow path, the operation is outside of the desired ranges:
a) changing the pressure set point for the supplied pressure fluid;
b) switching to a new target path;
with the proviso that the number of cycles required per time unit to compensate for the pressure drop with fluid at the given pressure set point and for the target path is within the desired or given ranges.

8. A process in accordance with one of the preceding claims, wherein the fluid is a gas, preferably air, nitrogen, carbon dioxide, a noble gas or ammonia.

9. A process in accordance with one of claims 1 - 4, in which the fluid user comprises a filter unit (2) comprising a filterhousing with a housing inlet, one or more pre-wetted filters arranged therein to divide the interior of the housing into two areas so that fluid can flow from one area to the other only through said filter(s), one of the areas being in fluid communication with the housing inlet, the other being in communication with the housing outlet, in which process said housing inlet is put into fluid communication with each of said outlet valves, and, prior to step (a):
fluid is initially supplied until a first pressure has been attained in said user, which is near the test pressure;
the fluid flow from the fluid supplier to the user is throttled such as to reduce the pressure increase per unit of time in the user until the test pressure has been established in the user housing inlet chamber;
the connection between the fluid connection between the flow and the source of fluid is switched off.

10. An apparatus for metering and controlling fluid flow comprising a plurality of parallel flow paths (31, 32......39) each including a respective chamber ($VO_x$), the chamber of each path having a different volume from those of the chambers of other paths, characterized in that each flow path (31, 32....39) is

12

provided with an inlet valve ($V_x$) connecting said path with a fluid source (3) and with an outlet valve ($V_y$) connecting said path with a fluid user (2), and said apparatus comprises means for determining the pressure/time behavior of the user (2) and thereupon selecting one of said paths for said fluid passage, and means for controlling said valves in a selected path in order to pass fluid to the fluid user in a digital manner by alternately

aa) opening an inlet valve of said selected path connected to said source (3) to fill same with fluid, an outlet valve of said path connected to said user being closed,

bb) closing said inlet valve and opening the outlet valve of said selected path, thereby supplying a fluid volume as a fluid pulse to the user.

**11.** An apparatus in accordance with claim 10, comprising

a) a first connector unit (8, 10) for connection with a pressure controllable source (3) of fluid;

b) each said chamber having a chamber inlet and a chamber outlet, said chamber inlet being arranged for a fluid flow connection with said first connector (8), in particular, wherein said chamber is otherwise closed;

with the proviso that the volume sizes of the chambers ($VO_x$) of the path form a series of volume sizes from a smallest to a largest volume, in particular wherein each larger volume is significantly larger than the next smaller volume;

c) a second connector (6, 9) unit for connection with a user (2) of fluid, said connector being in fluid communication with the outlet of each of said chambers;

d) a plurality of actuating means adapted and arranged to independently operate each path such as to connect the individual chamber ($VO_x$) to the first connector (8) and/or to the second connector (9);

e) a computer control unit (36) operatively connected to said actuating means ($V_x$, $V_y$) for providing actuating signals to said actuating means for carrying out the respective connections and disconnections of said chambers.

**12.** An apparatus in accordance with claim 11, wherein

there are 2 * n actuating means each having an input and a manipulating output, said actuating means being adapted and arranged to operate and connected with its manipulating output to one of said n inlet valves or respectively n outlet valves upon the receipt of an actuating signal at the input thereof; and said computer control unit is operatively connected to said input's offset actuating means for providing actuating signals to the inputs of said actuating means.

**13.** An apparatus in accordance with claim 12 or 13, further characterized by the following features:

a) said actuating means are adapted to switch the corresponding valve ($V_x$ or $V_y$) upon receipt of the actuating signal from the open status to the closed status;

b) a source-pressure-sensor (DA2) having its pressure sensing area in or near said first connector unit (8) and thus in fluid communication to the source of fluid (3) when connected and having its signal output (CI2) adapted for direct or indirect control connection to said source of fluid such as to provide fluid of controlled pressure from said source at said first connector independently of the flow rate;

c) a user-pressure-sensor (DA3) having its pressure sensing areas in or near said second connector unit (9) and thus in fluid communication to the user and having its signal output (CI3) adapted for direct or indirect control connection to said computer such as to provide information on the pressure of the user when connected therewith;

d) the pressure sensors (DA2, DA3) are adapted to operate under pressures up to 10000 mbar, in particular up to a pressure in the range of 50 to 6000 mbar;

e) a pressure supply unit (10) having an inlet end for connection with a supplier (3) of pressurized fluid and an outlet end connected to said first connector (8), said pressure supply unit being adapted for providing fluid from said supplier at a constant pressure to its outlet end, and comprising one or more of the following elements:

aa) a source-vent-valve (5) connected with its control input to a pressure-sensor arranged to sense the pressure of the fluid supplied by said supplier to said pressure controller;

bb) a buffer chamber (VO1) just upstream of and in connection with said first connector (8);

cc) said source-pressure-sensor (DA2) being arranged to sense the pressure in the area of the buffer chamber and first connector;

dd) said buffer chamber (VO1) having two inlets, the first inlet thereof connected via an on-off valve (V2) and the second inlet thereof connected via an on-off valve (V3) in line with an adjustable throttle (D1) to said vent-valve;

f) a user-vent-valve (V4) arranged between said second connector and the fluid user (2);

g) each pressure sensor generates a signal at its signal-output which is correlated to the pressure it senses, and the signal outputs are connected to the computer and also all operating mechanisms of the valves are connected to said computer;

h) each flow path is arranged and adapted to also provide a flow resistance to said fluid which is significantly different from that of the volume-wise preceding and following path; preferably the flow resistance of the path of the higher chamber volume being lower than the flow resistance of the path of the lower chamber volume and vice versa.

## Revendications

1. Procédé de circulation d'un fluide d'une source (3) de fluide dans un appareil de commande (1) vers un appareillage utilisateur de fluide (2), en particulier un ensemble d'essai de filtres, l'appareil de commande comprenant plusieurs trajets parallèles de circulation (31, 32...39) comprenant chacun une chambre respective ($VO_x$), la chambre de chaque trajet ayant un volume différent de ceux des autres trajets, l'un des trajets étant utilisé pour la circulation du fluide, le procédé étant caractérisé par :

   a) la détermination du comportement pression-temps de l'appareillage utilisateur (2), puis la sélection de l'un des trajets pour la circulation du fluide,

   b) la circulation du fluide dans le trajet choisi vers l'appareillage utilisateur de manière numérique, en faisant alterner :

   aa) l'ouverture d'une entrée du trajet choisi connectée à la source (3) afin que le trajet soit rempli de fluide, une sortie du trajet raccordé à l'appareillage utilisateur étant fermée, et

   bb) la fermeture de l'entrée et l'ouverture de la sortie du trajet choisi avec transmission d'un volume de fluide sous forme d'une impulsion de fluide vers l'appareillage utilisateur.

2. Procédé selon la revendication 1, comprenant en outre :

   c) la détermination du comportement pression-temps de l'appareillage utilisateur dans l'étape (a) par mesure automatique de la diminution de pression dans l'appareillage utilisateur,

   d) la compensation de la diminution de pression par transmission d'un volume de fluide de la chambre du trajet choisi vers l'appareillage utilisateur au cours de cycles selon l'étape (b) afin que le nombre de cycles nécessaires par unité de temps pour la compensation de la vitesse de réduction de pression soit maintenu dans une plage prédéterminée,

   e) la répétition des étapes (c) et (d).

3. Procédé selon la revendication 1 ou 2, dans lequel le nombre de cycles par minute est compris entre quatre et douze et de préférence entre six et dix par minute.

4. Procédé selon la revendication 1 ou 2, dans lequel les dimensions des volumes des chambres ($VO_x$) des trajets forment une série de volumes allant d'un petit volume à un plus grand volume, en particulier dans lequel chaque plus grand volume est nettement supérieur au plus petit volume précédent.

5. Procédé selon la revendication 4, comprenant, avant l'étape (a), les étapes de mise en circulation du fluide dans le trajet de circulation de fluide avec la chambre de plus petit volume,

   de détermination automatique du comportement pression-temps de l'appareillage utilisateur,

   si le comportement pression-temps indique une consommation trop grande du fluide par l'appareillage utilisateur, la commutation automatique afin que le fluide circule dans le trajet ayant la chambre de volume supérieur suivant, et

   de répétition des étapes précédentes jusqu'à ce que le comportement pression-temps de l'appareillage utilisateur se trouve dans la plage voulue.

6. Procédé selon l'une quelconque des revendications précédentes, comprenant le réglage de la pression de la source (3) de fluide à une valeur qui est égale à un point de consigne de pression, en particulier le point de consigne de pressions étant compris entre 0,1 et 5 bars et de préférence entre 0,2 et 2 bars au-delà de la pression de l'appareillage utilisateur.

**7.** Procédé selon la revendication 6, comprenant l'exécution de l'une au moins des étapes suivantes lorsque la réduction de pression dans l'appareillage utilisateur est telle que, pour le point de consigne de pression et pour le trajet de circulation utilisé, le fonctionnement se trouve en dehors des plages voulues :

a) le changement du point de consigne de pression pour le fluide sous pression transmis,

b) la commutation à un nouveau trajet cible,

pourvu que le nombre de cycles nécessaires par unité de temps pour la compensation de la réduction de pression par le fluide au point de consigne donné et pour le trajet cible soit compris dans les plages voulues ou données.

**8.** Procédé selon l'une quelconque des revendications précédentes, dans lequel le fluide est un gaz, de préférence de l'air, de l'azote, de l'anhydride carbonique, un gaz rare ou de l'ammoniac.

**9.** Procédé selon l'une des revendications 1 à 4, dans lequel l'appareillage utilisateur de fluide comprend un ensemble à filtres (2) comprenant un boîtier de filtre ayant une entrée de filtre, un ou plusieurs filtres mouillés préalablement et placés à l'intérieur afin qu'ils divisent l'intérieur du boîtier en deux zones si bien que le fluide peut circuler d'une zone à l'autre uniquement par passage à travers le filtre ou les filtres, l'une des zones étant en communication avec l'entrée du boîtier et l'autre avec la sortie du boîtier, le procédé étant tel que l'entrée du boîtier est mise en communication avec chacune des soupapes de sortie et, avant l'étape (a) :

le fluide est transmis initialement jusqu'à ce qu'une première pression soit atteinte dans l'appareillage utilisateur, cette pression étant proche de la pression d'essai,

la circulation du fluide à partir de l'alimentation en fluide vers l'appareil utilisateur est étranglée de manière que l'augmentation de pression par unité de temps dans l'appareillage utilisateur soit réduite jusqu'à ce que la pression d'essai soit établie dans la chambre d'entrée du boîtier de l'appareillage utilisateur, et

la connexion entre le trajet et la source de fluide est interrompue par commutation.

**10.** Appareil de mesure et de réglage d'un débit de fluide comprenant plusieurs trajets parallèles de circulation (31, 32...39) comprenant chacun une chambre respective ($VO_x$), la chambre de chaque trajet ayant un volume différent de celui des chambres des autres trajets, caractérisé en ce que chaque trajet de circulation (31, 32...39) a une soupape d'entrée ($V_x$) raccordant ce trajet à une source de fluide (3) et une soupape de sortie ($V_y$) raccordant le trajet à un appareillage utilisateur (2) du fluide, l'appareil comprenant un dispositif de détermination du comportement pression-temps de l'appareillage utilisateur (2) et sélectionnant ensuite l'un des trajets pour la circulation du fluide, et un dispositif de commande des soupapes du trajet choisi afin que le fluide soit transmis à l'appareillage utilisateur du fluide de manière numérique par réalisation en alternance de :

aa) l'ouverture d'une soupape d'entrée du trajet choisi raccordé à la source (3) afin qu'il soit rempli de fluide, une soupape de sortie du trajet raccordé à l'appareillage utilisateur étant fermée, et

bb) la fermeture de la soupape d'entrée et l'ouverture de la soupape de sortie du trajet choisi afin qu'un volume de fluide soit transmis à l'appareillage utilisateur sous forme d'une impulsion de fluide.

**11.** Appareil selon la revendication 10, comprenant :

a) un premier ensemble connecteur (8, 10) destiné à assurer la connexion à la source de fluide (3) dont la pression est réglable,

b) chaque chambre ayant une entrée et une sortie de chambre, l'entrée de la chambre étant destinée à être connectée au premier connecteur (8) en particulier, la chambre étant fermée par ailleurs,

les volumes des chambres ($VO_x$) du trajet forment une série de volumes allant d'un plus petit volume à un plus grand volume, chaque volume plus grand étant nettement supérieur au volume juste inférieur,

c) un second ensemble connecteur (6, 9) destiné à assurer le raccordement à un appareillage utilisateur (2), le connecteur étant en communication avec la sortie de chacune des chambres,

d) plusieurs dispositifs de manoeuvre dont la disposition et la réalisation sont telles qu'ils commandent indépendamment chaque trajet de manière que la chambre individuelle ($VO_x$) soit connectée au premier connecteur (8) et/ou au second connecteur (9), et

e) un ensemble (36) de commande à ordinateur connecté aux dispositifs de manoeuvre ($V_x$, $V_y$) et destiné à transmettre des signaux de manoeuvre aux dispositifs de manoeuvre pour l'exécution des connexions et déconnexions respectives des chambres.

12. Appareil selon la revendication 11, dans lequel :

2n dispositifs de manoeuvre sont présents et ont chacun une entrée et une sortie de manipulation, les dispositifs de manoeuvre ayant une disposition et une réalisation telles que, en fonctionnement, ils sont connectés par la sortie de manipulation à l'une des n soupapes d'entrée ou respectivement l'une des n soupapes de sortie lors de la réception d'un signal de manoeuvre à l'entrée manipulation, et

l'ensemble de commande à ordinateur est connecté aux entrées des dispositifs de manoeuvre afin qu'il transmette des signaux de manoeuvre aux entrées des dispositifs de manoeuvre.

13. Appareil selon la revendication 12 ou 13, caractérisé en outre par les propriétés suivantes :

a) les dispositifs de manoeuvre sont destinés à commuter la soupape correspondante ($V_x$ ou $V_y$) lors de la réception d'un signal de manoeuvre, d'un état ouvert à un état fermé,

b) un capteur (DA2) de pression de la source a sa zone de détection de pression qui est placée dans le premier ensemble connecteur (8) ou à proximité et qui est ainsi en communication avec la source de fluide (3) lorsqu'il est connecté, et il a sa sortie de signaux (CI2) destinée à être connectée directement ou indirectement à la source de fluide de manière que la source transmette un fluide à pression réglée au premier connecteur indépendamment du débit,

c) un capteur (DA3) de la pression de l'appareillage utilisateur a ses zones de détection de pression placées dans le second ensemble connecteur (9) ou à proximité et ainsi en communication avec l'appareillage utilisateur, et a sa sortie de signaux (CI3) destinée à être connectée directement ou indirectement à l'ordinateur de manière qu'une information relative à la pression de l'appareillage utilisateur soit transmise lorsqu'il est connecté,

d) les capteurs (DA2, DA3) de pression sont destinés à fonctionner à des pressions pouvant atteindre 10 000 mbar, en particulier jusqu'à une pression comprise entre 50 et 6 000 mbar,

e) un ensemble d'alimentation sous pression (10) a une extrémité d'entrée destinée à être raccordée à une alimentation (3) en fluide sous pression et une extrémité de sortie raccordée au premier connecteur (8), l'ensemble d'alimentation sous pression étant destiné à transmettre du fluide de l'organe d'alimentation à une pression constante à son extrémité de sortie et comprenant un ou plusieurs des éléments suivants :

aa) une soupape (5) de ventilation de la source raccordée par son entrée de commande à un capteur de pression destiné à détecter la pression du fluide transmis par l'organe d'alimentation à l'organe de commande de pression,

bb) une chambre tampon (VO1) placée juste en amont du premier connecteur (8) et raccordée à celui-ci,

cc) le capteur (DA2) de pression de la source étant disposé afin qu'il détecte la pression dans la région de la chambre tampon et du premier connecteur,

dd) la chambre tampon (VO1) ayant deux entrées, la première étant connectée par une soupape d'arrêt (V2) et la seconde entrée étant connectée par une soupape d'arrêt (V3) à un organe réglable d'étranglement (D1) connecté à la soupape de ventilation,

f) une soupape (V4) de ventilation de l'appareillage utilisateur est placée entre le second connecteur et l'appareillage utilisateur (2) de fluide,

g) chaque capteur de pression crée un signal, à sa sortie de signaux, qui est en corrélation avec la pression qu'il détecte, et les sorties de signaux sont connectées à l'ordinateur et tous les mécanismes de commande des soupapes sont connectés à l'ordinateur, et

h) chaque trajet de circulation a une disposition et une réalisation telles qu'il crée une résistance à la circulation du fluide qui est nettement différente de celle du trajet précédent ou suivant dans l'ordre des volumes, et, de préférence, la résistance à la circulation formée dans le trajet ayant le plus grand volume de chambre est inférieure à la résistance à la circulation du trajet ayant un plus petit volume de chambre, et inversement.

**Patentansprüche**

1. Verfahren zum Durchleiten eines Fluids von einer Fluidquelle (3) durch eine Regeleinrichtung (1) zu einem Fluidbenutzer (2), insbesondere eine Filterprüfeinheit, wobei die Regeleinrichtung aufweist eine Vielzahl von parallelen Flußpfaden (31, 32 ... 39) jede einschließlich einer jeweiligen Kammer ($VO_x$),

wobei die Kammer jedes Pfades ein unterschiedliches Volumen von dem der Kammern der anderen Pfade hat, wobei einer der Pfade zum Fluiddurchgang verwendet wird, wobei das Verfahren gekennzeichnet ist durch

a) Bestimmen des Druck/Zeit-Verhaltens des Benutzers (2) und daraufhin Auswahl eines der Pfade für den Fluiddurchgang,

b) Durchleiten des Fluids durch den ausgewählten einen Pfad zum Benutzer auf digitale Weise durch abwechselndes

aa) Öffnen eines Einlasses des ausgewählten Pfades, der mit der Quelle (3) verbunden ist, und diese mit Fluidzuführung, wobei ein Auslaß des Pfades, der mit dem Benutzer verbunden ist, geschlossen wird,

bb) Schließen des Einlasses und Öffnen des Auslasses des ausgewählten Pfades, wodurch ein Fluidvolumen als ein Fluidpuls dem Benutzer zugeführt wird.

2. Verfahren nach Anspruch 1, daß weiter aufweist,

c) Bestimmen des Druck/Zeit-Verhaltens des Benutzers im. Schritt (a) durch automatisches Messen einer Druckabnahme beim Benutzer;

d) Kompensieren der Druckabnahme durch Bereitstellung eines Fluidvolumens von der Kammer des ausgewählten Pfads zum Benutzer durch Zyklen gemäß Schritt (b), um die Zahl solcher pro Zeiteinheit notwendiger Zyklen aufrechtzuerhalten, und um die Druckabfallgeschwindigkeit innerhalb eines vorbestimmten Bereichs zu kompensieren;

e) Wiederholen der Schritte (c) und (d).

3. Verfahren nach Anspruch 1 oder 2, wobei die Zahl der Zyklen pro min in einem Bereich von 4 - 12, insbesondere 6 - 10 Zyklen pro min liegt.

4. Verfahren nach Anspruch 1 oder 2, wobei die Volumengrößen der Kammer ($VO_x$) der Pfade eine Serie von Volumengrößen von einem kleinsten bis zu einem größten Volumen bilden, wobei insbesondere jedes größere Volumen merklich größer als das nächstkleinere Volumen ist.

5. Verfahren nach Anspruch 4, das weiter vor Schritt (a) aufweist, die Schritte des Durchleitens von Fluid durch den Flußpfad mit der Kammer des kleinsten Volumens;

automatisches Bestimmen des Druck/Zeit-Verhaltens des Benutzers;

wenn das Druck/Zeit-Verhalten einen zu schnellen Verbrauch des Fluids durch den Benutzer anzeigt, automatisches Umschalten, um das Fluid durch den Pfad mit der Kammer des nächsthöheren Volumens durchzuleiten;

Wiederholen der obengenannten Schritte bis das Druck/Zeit-Verhalten des Benutzers in einem erwünschten Bereich liegt.

6. Verfahren nach einem der vorhergehenden Ansprüche, das weiter aufweist Steuern des Drucks der Fluidquelle (3) bei einem Wert, der einem Druck-Sollwert gleichkommt, insbesondere wobei der Druck-Sollwert 0,1 - 5 bar, spezieller 0,2 - 2 bar oberhalb des Benutzerdrucks ist.

7. Verfahren nach Anspruch 6, das aufweist Ausführen eines oder beider der folgenden Schritte, wenn die Druckabnahme beim Benutzer derart ist, daß für den gegebenen Druck-Sollwert und für den Betriebsflußpfad, der Betrieb außerhalb des erwünschten Bereichs ist:

a) Ändern des Druck-Sollwerts für das zugeführte Druckfluid;

b) Umschalten auf einen neuen Zielpfad;

unter der Bedingung, daß die Zahl der erforderlichen Zyklen pro Zeiteinheit, um den Druckabfall mit Fluid bei gegebenem Druck-Sollwert und für den Zielpfad zu kompensieren, innerhalb der erwünschten oder gegebenen Bereiche ist.

8. Verfahren nach einem der vorhergehenden Ansprüche, wobei das Fluid ein Gas ist, bevorzugt Luft, Stickstoff, Kohlendioxid, ein Edelgas oder Ammoniak.

9. Verfahren nach einem der Ansprüche 1 - 4, in welchem der Fluidbenutzer eine Filtereinheit (2) aufweist, welche aufweist ein Filtergehäuse mit einem Gehäuseeinlaß, einen oder mehrere vorbenetzte darin angeordnete Filter, um das Innere des Gehäuses in zwei Bereiche einzuteilen, so daß Fluid von einem Bereich zum anderen nur durch den/die Filter fließen kann, wobei einer der Bereiche im Fluidaustausch mit dem Gehäuseeinlaß steht, wobei der andere im Austausch mit dem Gehäuseauslaß steht, wobei in dem Verfahren der Gehäuseeinlaß in Fluidaustausch mit jedem der Auslaßventile gebracht wird, und vor Schritt (a):

Fluid zuerst zugeführt wird bis ein erster Druck im Benutzer erreicht worden ist, welcher nahe dem Prüfdruck ist;

der Fluidfluß vom Fluidzuführer zum Benutzer derart gedrosselt wird, daß die Druckzunahme pro Zeiteinheit beim Benutzer reduziert wird bis der Prüfdruck in der Benutzergehäuseeinlaßkammer hergestellt ist;

die Verbindung zwischen der Fluidverbindung zwischen dem Fluß und der Fluidquelle abgeschalten ist.

10. Gerät zum Zudosieren und Steuern eines Fluidflusses, aufweisend eine Vielzahl von parallelen Flußpfaden (31, 32 ... 39), wobei jeder eine jeweilige Kammer ($VO_x$) enthält, wobei die Kammer von jedem Pfad ein von diesen Kammern anderer Pfade unterschiedliches Volumen hat, dadurch gekennzeichnet, daß jeder Flußpfad (31, 32 ... 39) bereitgestellt wird mit einem Einlaßventil ($V_x$), das den Pfad mit einer Fluidquelle (3) verbindet, und mit einem Auslaßventil ($V_y$), das den Pfad mit einem Fluidbenutzer (2) verbindet, und das Gerät weist eine Einrichtung auf zum Bestimmen des Druck/Zeit-Verhaltens des Benutzers (2), und daraufhin Auswählen einen der Pfade für den Fluiddurchgang, und eine Einrichtung zum Steuern der Ventile in einem ausgewählten Pfad, um Fluid zum Fluidbenutzer auf digitale Weise durchzuleiten durch abwechselndes

aa) Öffnen eines Einlaßventils des ausgewählten Pfades, der mit der Quelle (3) verbunden ist, und diese mit Fluid zu füllen, wobei ein Auslaßventil des Pfades, der mit dem Benutzer verbunden ist, geschlossen wird,

bb) Schließen des Einlaßventils und Öffnen des Auslaßventils des ausgewählten Pfades, wodurch ein Fluidvolumen als ein Fluidpuls zum Benutzer zugeführt wird.

11. Gerät nach Anspruch 10, aufweisend

a) eine erste Verbindungsstückeinheit (8, 10) zur Verbindung mit einer drucksteuerbaren Fluidquelle (3);

b) jede der Kammer, die einen Kammereinlaß und einen Kammerauslaß hat, wobei der Kammereinlaß angeordnet ist zur Fluidflußverbindung mit dem ersten Verbindungsstück (8), wobei insbesondere die Kammer ansonsten geschlossen ist;

unter der Bedingung, daß die Volumengrößen der Kammer ($VO_x$) des Pfades eine Serie von Volumengrößen von einem kleinsten bis zu einem größten Volumen bilden, wobei insbesondere jedes größere Volumen bedeutend größer als das nächstkleinere Volumen ist;

c) die zweite Verbindungsstückeinheit (6, 9) zur Verbindung mit einem Benutzer (2) von Fluid, wobei das Zwischenstück im Fluidaustausch mit dem Auslaß jeder der Kammern steht;

d) eine Vielzahl von auslösenden Einrichtungen angepaßt und angeordnet zum unabhängigen Betreiben jeden Pfades derart, daß die individuelle Kammer ($VO_x$) mit dem ersten Verbindungsstück (8) und/oder dem zweiten Verbindungsstück (9) verbunden wird;

e) eine Computersteuereinheit (36) operativ verbunden mit den auslösenden Einrichtungen ($V_x$, $V_y$) zur Bereitstellung auslösender Signale zu den auslösenden Einrichtungen zur Ausführung der jeweiligen Verbindungen und Trennungen der Kammern.

12. Gerät nach Anspruch 11, wobei

es 2 * n auslösende Einrichtungen gibt, wovon jede eine Eingabe und eine manipulierende Ausgabe hat, wobei die auslösenden Einrichtungen angepaßt und angeordnet sind zum Betätigen und verbunden sind mit ihrer manipulierenden Ausgabe zu einem der n Einlaßventile oder jeweils n Auslaßventile nach Erhalt eines auslösenden Signals an dessen Eingabe; und

die Computersteuereinheit operativ verbunden ist mit den Oftset auslösenden Einrichtungen der Eingabe zur Bereitstellung auslösender Signale an die Eingaben der auslösenden Einrichtungen.

13. Gerät nach Anspruch 12 oder 13, weiter gekennzeichnet durch die folgenden Merkmale:

a) die auslösenden Einrichtungen sind angepaßt zum Umschalten des entsprechenden Ventils ($V_x$ oder $V_y$) nach Erhalt des auslösenden Signals vom offenen Zustand zum geschlossenen Zustand;

b) ein Quellen-Druck-Sensor (DA2), der seinen Druckaufnahmebereich in oder nahe der ersten Verbindungsstückeinheit (8) hat und auf diese Weise in Fluidaustausch mit der Fluidquelle (3) steht, wenn er verbunden ist, und wobei seine Signalausgabe (CI2) angepaßt ist zur direkten oder indirekten Steuerung der Verbindung mit der Fluidquelle, derart, daß Fluid von gesteuertem Druck bereitgestellt wird von der Quelle am ersten Verbindungsstück und zwar unabhängig von der Flußrate;

c) ein Benutzer-Druck-Sensor (DA3), der seine druckaufnehmenden Bereiche in oder nahe der zweiten Verbindungsstückeinheit (9) hat und auf diese Weise im Fluidaustausch mit dem Benutzer steht, und der seine Signalausgabe (CI3) angepaßt hat an die direkte oder indirekte Steuerungsverbindung zum Computer derart, daß Information über den Druck des Benutzers bereitgestellt wird, wenn er damit verbunden ist;

d) die Drucksensoren (DA2, DA3) sind angepaßt zum Betätigen unter Drücken bis zu 10 000 mbar, insbesondere bis zu einem Druck im Bereich von 50 - 6 000 mbar;

e) eine Druckzufuhreinheit (10), die besitzt ein Einlaßende zur Verbindung mit einem Zuführer (3) von unter Druck gesetztem Fluid, und ein Auslaßende, das mit dem ersten Zwischenstück (8) verbunden ist, wobei die Druckzufuhreinheit angepaßt ist zur Bereitstellung von Fluid vom Zuführer bei einem konstanten Druck zu seinem Auslaßende, und eines oder mehrere der folgenden Bauteile aufweist:

aa) ein Quellen-Entlüftungs-Ventil (5), das mit seiner Steuerungseingabe mit einem Drucksensor verbunden ist, der angeordnet ist zur Aufnahme des Drucks von dem Fluid, das vom Zuführer zur Druckregeleinrichtung zugeführt wird;

bb) eine Pufferkammer (VO1) gerade stromaufwärts von und in Verbindung mit dem ersten Zwischenstück (8);

cc) der Quellen-Druck-Sensor (DA2), der angeordnet ist zur Aufnahme des Drucks im Bereich der Pufferkammer und des ersten Verbindungsstücks;

dd) der Pufferkammer (VO1), die zwei Einlässe hat, von denen der erste Einlaß über ein Ein-Aus-Ventil (V2) verbunden ist, und von denen der zweite Einlaß über ein Ein-Aus-Ventil (V3) verbunden ist, hintereinander mit einer regulierbaren Drossel (D1) zum Entlüftungsventil;

f) ein Benutzer-Entlüftungs-Ventil (V4), angeordnet zwischen dem zweiten Verbindungsstück und dem Fluidbenutzer (2);

g) jeder Drucksensor ein Signal an seiner Signal-Ausgabe erzeugt, welches mit dem aufgenommenen Druck korreliert, und die Signalausgaben mit dem Computer verbunden sind, und auch alle Betriebsmechanismen der Ventile mit dem Computer verbunden sind;

h) jeder Flußpfad angeordnet und angepaßt ist, um auch einen Flußwiderstand zum Fluid bereitzustellen, der sich wesentlich unterscheidet von dem des volumenartigen vorhergehenden und folgenden Pfades; wobei vorzugsweise der Flußwiderstand des Pfades des Volumens der höheren Kammer niedriger ist als der Flußwiderstand des Pfades des Volumens der niedrigeren Kammer, und umgekehrt.

FIG. 1

FIG. 2

FIG. 3

EP 0 314 822 B1

ST1 ADJUSTMENT OF
PROGRAMMED
TEST PRESSURE

ST2 DETERMINATION
OF SUITABLE
REFILL VOLUME

ST3 TRANSMISSION OF
PRESSURE IN
BUFFER CHAMBER TO
THE BACKGROUND
PROCESSOR

ST4 THRESHOLD
$P \geq P_{SCHW}$ ?  NO

YES

ST5 FILLING WITH
CALCULATED
FILL VOLUME

ST6 MEASURMENT OF
ACTUAL FLOW

ST7 LENGTH OF
TESTTIME
REACHED ?  NO

YES

FIG. 4

ST8 VENTING OF
SYSTEM

23